# EUROPÄISCHE PATENTSCHRIFT

(11) **EP 0 863 026 B1**
(45) Veröffentlichungstag und Bekanntmachung des Hinweises auf die Patenterteilung: **04.02.2004**
(21) Anmeldenummer: 98103747.6
(22) Anmeldetag: 03.03.1998
(51) Int. Cl.: B60C 11/03, B60C 11/04, B60C 11/13

(54) **Fahrzeugreifen**
Vehicle tyre
Bandage pneumatique pour véhicule

(30) Priorität: 03.03.1997 DE 19708612
(43) Veröffentlichungstag der Anmeldung: 09.09.1998
(73) Patentinhaber: Dunlop GmbH & Co. KG, 63450 Hanau (DE)
(72) Erfinder: Gerresheim, Manfred, Dr., 63179 Obertshausen-Hausen (DE); Miyabe, Saburo, 63457 Gross Auheim (DE); Glotzbach, Dieter, 63477 Maintal (DE); Riegel, Joachim, 63589 Linsengericht (DE)
(74) Vertreter: Finsterwald, Manfred

(56) Entgegenhaltungen:
- EP-A- 0 787 599
- US-A- 4 632 166
- US-A- 5 188 684

## Beschreibung

Die Erfindung betrifft einen Fahrzeugluftreifen mit einer eine richtungsgebundene Profilierung aufweisenden Lauffläche.

Bei bekannten Luftreifen mit Umfangsrillen ist problematisch, daß ein ausgeprägtes, sogenanntes Orgelpfeifengeräusch auftritt, das eine typische Frequenz im Bereich von 900 Hz bis 1100 Hz besitzt, das im Hinblick auf die ansonsten geringer werdenden Fahrzeuggeräusche sehr unerwünscht ist. Die Umfangsrillen, die Ursache für diese Geräuschentwicklung sind, gewährleisten wiederum ein gutes Aquaplaningverhalten des jeweiligen Reifens, das heißt die Forderung nach Geräuschreduzierung einerseits und nach einem guten Aquaplaningverhalten andererseits sind gegenläufig.

Aufgabe der Erfindung ist es, einen Fahrzeugreifen der eingangs angegebenen Art so auszubilden, daß zum einen die störende Geräuschentwicklung im Frequenzbereich von 900 Hz bis 1100 Hz zumindest stark minimiert und andererseits dabei das Aquaplaningverhalten nicht beeinträchtigt wird.

Gelöst wird diese Aufgabe nach der Erfindung im wesentlichen dadurch, daß beiderseits einer zentralen Umfangsrippe jeweils eine geringere Breite als die Umfangsrippe aufweisende innere Umfangsrille vorgesehen ist, daß zwischen diesen inneren Umfangsrillen und im Schulterübergangsbereich gelegenen äußeren Umfangsrillen, die geringere Breite als die inneren Umfangsrillen aufweisen, jeweils ein Laufflächenzwischenbereich ausgebildet ist, in dem in Richtung der Schulterbereiche bogenförmig gekrümmte Schrägrillen vorgesehen sind, die einerseits in die äußeren Umfangsrillen münden und andererseits mit der jeweils in Laufrichtung nachfolgenden, gleichartig ausgeführten Schrägrille in Verbindung stehen.

Die im Zentralbereich vorhandenen Umfangsrillen besitzen eine im Vergleich zur gesamten Laufflächenbreite sehr geringe Rillenbreite, so daß sich das störende Orgelpfeifengeräusch im Bereich der Reifenaufstandsfläche zumindest im wesentlichen nicht einstellt, und durch die im Laufflächenzwischenbereich ausgebildeten Schrägrillen wird gewährleistet, daß sich beim Durchlaufen der Aufstandsfläche stets unterschiedliche Rillenneigungen ergeben, was zur Geräuschminderung führt. Dennoch wird im Bereich der Aufstandsfläche eine gute Wasserableitung erhalten, da in dem eine relativ geringe Breite besitzenden Zentralbereich die Wasserabführung über die schmalen Umfangsnuten möglich ist und durch die Aufgliederung des Laufflächenzwischenbereichs mittels der Schrägrillen, die in der Aufstandsfläche nach außen offen sind, eine ebenfalls gute Wasserableitung auch zu den Schulterbereichen hin erzielt wird.

Weitere besonders vorteilhafte Merkmale der Erfindung sind in den Unteransprüchen sowie in der nachfolgenden Beschreibung eines Ausführungsbeispiels angegeben.

Die sich auf das Ausführungsbeispiel beziehende Zeichnung zeigt in
- Figur 1: eine Draufsicht auf die Reifenaufstandsfläche eines Reifens nach der Erfindung, und
- Figur 2: eine Draufsicht auf einen Teilbereich des Reifens nach Figur 1, wobei zugeordnet und oberhalb dieser Darstellung die zugehörige Reifenquerschnittskontur mit auf die Laufflächenbreite bezogenen Ortsangaben gezeigt ist.

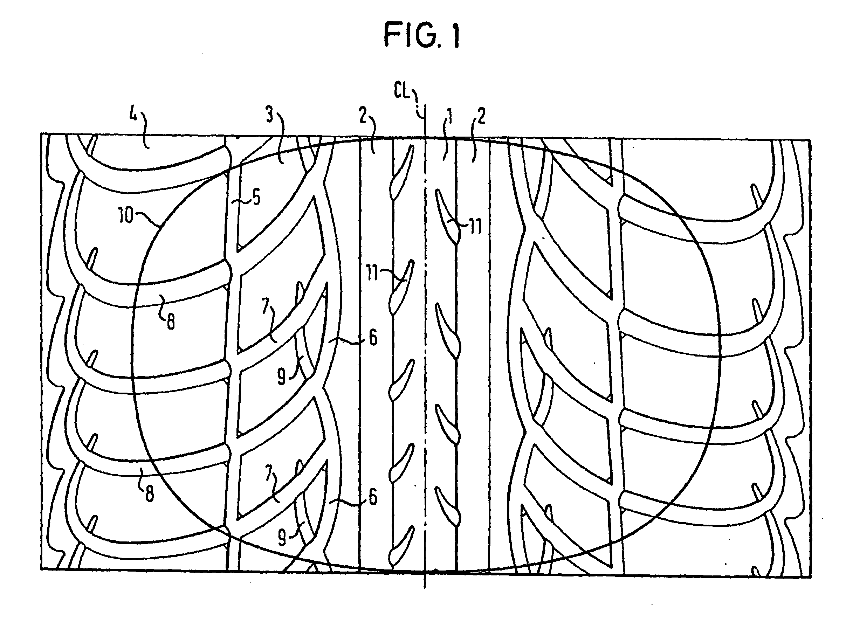

Die Profilgestaltung des in Figur 1 in Form eines Laufflächenabschnitts gezeigten Reifens umfaßt eine mittige Umfangsrippe 1, an die sich beiderseits jeweils eine innere Umfangsrille 2 anschließt. Diese Umfangsrillen 2 besitzen eine geringere Breite als die zentrale Umfangsrippe 1.

Zu den Reifenschultern hin schließt sich an die jeweilige Umfangsrille 2 ein Laufflächenzwischenbereich 3 an, der in den Schulterbereich 4 übergeht. Zwischen dem Schulterbereich 4 und dem Laufflächenzwischenbereich erstreckt sich eine äußere Umfangsrille 5, die aus in Richtung der Reifenbreite zueinander versetzten Abschnitten besteht, so daß diese äußere Umfangsrille 5 ihren Charakter als reine Umfangsrille zumindest weitgehend verliert. Diese äußere Umfangsrille 5 besitzt geringere Breite als die innere Umfangsrille 2.

Im Laufflächenzwischenbereich sind in Richtung der Schulterbereiche 4 bogenförmige gekrümmte Schrägrillen 6 vorgesehen, die einerseits in die äußeren Umfangsrillen 5 münden und andererseits mit der jeweils in Laufrichtung nachfolgenden, gleichartig ausgebildeten Schrägrille 6 in Verbindung stehen. Immer dort, wo eine Schrägrille 6 in die nachfolgende Schrägrille übergeht, setzt sie sich noch in Form eines gebogenen, die Laufrichtung kennzeichnenden Rillenendes 9 fort, deren Tiefe auf Null abnimmt, das heißt dieses Rillenende 9 ist im wesentlichen hinsichtlich der Reifeneigenschaften funktionslos.

Zwischen zwei gleichartigen Schrägrillen 6 ist jeweils eine bogenförmige Zwischenrille 7 vorgesehen, die mit ähnlicher Krümmung wie die Schrägrillen 6 zwischen einem innenliegenden Schrägrillenabschnitt und einer äußeren Umfangsrille 5 verläuft. Diese Zwischenrillen werden von den Rillenenden 9 geschnitten.
An den Stellen, an denen die gegeneinander leicht versetzten Abschnitte der äußeren Umfangsrillen 5 aufeinandertreffen, münden die Schrägrillen 6 und Zwischenrillen 7 in diese äußere Umfangsrille 5 und setzen sich in den Schulterbereich 4 in Form von gekrümmten Schulterrillen 8 fort, die in ihrem Wirkungsbereich mit der Reifenmittellinie CL einen Winkel von etwa 70° bis 90° einschließen. Ihre hinsichtlich der Tiefe bis auf den Wert Null abnehmenden Enden sind abgewinkelt, verlaufen in ähnlicher Richtung wie die Rillenenden 9 und haben ebenfalls nur laufrichtungskennzeichnende Funktion.

Die zentrale Umfangsrippe 1 ist mit in Umfangsrichtung gegeneinander versetzten, gekrümmten und relativ kurzen Sackrillen 11 versehen, die zu einer Auflockerung dieser Umfangsrippe 1 führen.

Die sich im Betrieb ergebende Reifenaufstandsfläche ist mit der Bezugsziffer 10 gekennzeichnet. Innerhalb dieser Reifenaufstandsfläche 10 liegen keine geschlossenen Rillenbereiche vor, das heißt alle in die Aufstandsfläche eintretenden Rillen können zur Entwässerung beitragen, so daß die Forderung nach einem guten Aquaplaningverhalten erfüllt wird und aufgrund der Schrägverläufe des überwiegenden Teils der Rillen und der geringe Breite besitzenden Umfangsrillen auch die Geräuscherzeugung minimiert werden kann.

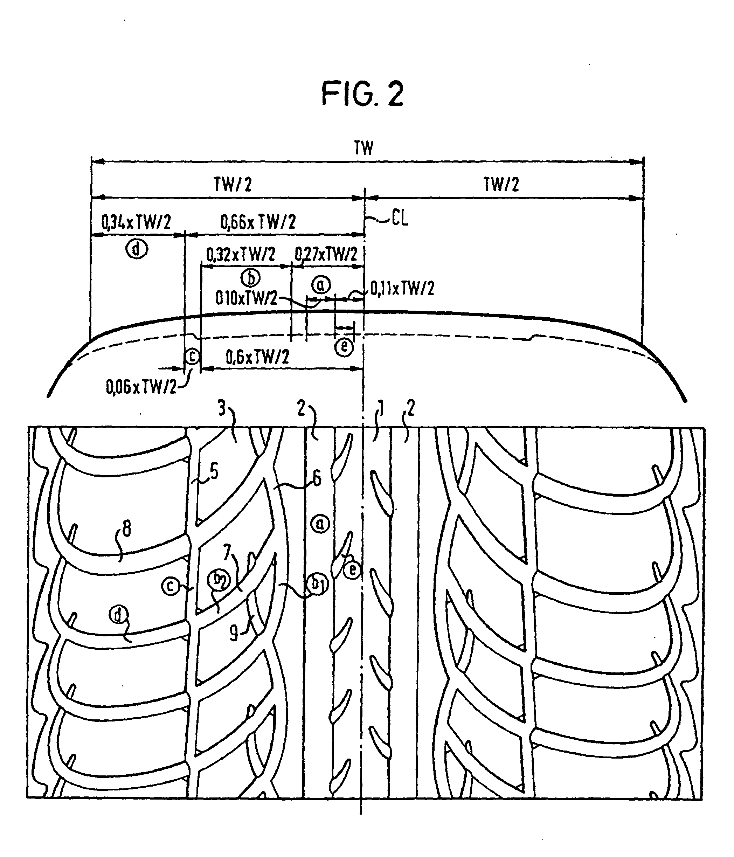

Figur 2 zeigt anhand des bevorzugten Ausführungsbeispiels die Abmessungsrelationen zwischen den verschiedenen Rillen sowie der Umfangsrippe und deren Anordnung bzw. Positionierung bezogen auf die Laufflächenbreite.

Die Laufflächenbreite TW erstreckt sich zwischen den Schnittpunkten einer entsprechen der Lauffläche verlaufenden Geraden und Tangenten, die an die Reifenschulter angelegt sind.
Bezüglich der Rillen, die in Figur 2 mit a, b₁, b₂, c, d, e bezeichnet sind, ergeben sich die in der nachfolgenden Tabelle angegebenen Werte bezüglich der Bereichserstreckung, des Abstands von der Reifenmittellinie C_{L}, der Rillenbreite und des Rillenwinkels.

| Rille | a | b₁ | b₂ | c | d | e |
|---|---|---|---|---|---|---|
| Bereich [x^{TW}/₂] | 0,10 | 0,32 | | 0,06 | 0,34 | 0,07 |
| Abstand -C_{L} [x^{TW}/₂] | 0,11 | 0,27 | | 0,6 | 0,66 | 0,04 |
| Rillenbreite [x^{TW}/₂] | 0,10 | 0,04 ∼ 0,06 | 0,06 | 0,04 | 0,06 ∼ 0,08 | 0,01 ∼ 0,05 |
| Rillenwinkel [°] | 0 | 0° ∼ 70° | 30° ∼ 70° | 0°, mit 3° Versatz | 70° ∼ 90° | 10° ∼ 40° |

Die in der Tabelle angegebenen Werte sind bevorzugte Werte, es kann aber von diesen Werten auch abgewichen werden, soweit das beschriebene Grundkonzept der Profilgestaltung beibehalten wird. Abweichungen im Bereich von ± 10 % sind möglich, ohne das Grundkonzept der Erfindung zu verlassen.

### BEZUGSZEICHENLISTE

- 1: Umfangsrippe
- 2: Innere Umfangsrille
- 3: Laufflächenzwischenbereich
- 4: Schulterbereich
- 5: Äußere Umfangsrille
- 6: Schrägrillen
- 7: Zwischenrillen
- 8: Schulterrillen
- 9: Rillenende
- 10: Reifenaufstandsfläche
- 11: Sackrille

## Patentansprüche

1. Fahrzeugreifen mit einer eine richtungsgebundene Profilierung aufweisenden Lauffläche,
**dadurch gekennzeichnet,**
**daß** beiderseits einer zentralen Umfangsrippe (1) jeweils eine geringere Breite als die Umfangsrippe (1) aufweisende innere Umfangsrille (2) vorgesehen ist,
**daß** zwischen diesen inneren Umfangsrillen (2) und im Schulterübergangsbereich gelegenen äußeren Umfangsrillen (5), die geringere Breite als die inneren Umfangsrillen (2) aufweisen, jeweils ein Laufflächenzwischenbereich (3) ausgebildet ist, in dem in Richtung der Schulterbereiche (4) bogenförmig gekrümmte Schrägrillen (6) vorgesehen sind, die einerseits in die äußeren Umfangsrillen (5) münden und andererseits mit der jeweils in Laufrichtung nachfolgenden, gleichartig ausgeführten Schrägrille (6) in Verbindung stehen.

2. Fahrzeugreifen nach Anspruch 1, **dadurch gekennzeichnet, daß** zwischen zwei gleichartigen Schrägrillen (6) jeweils eine bogenförmige Zwischenrille (7) vorgesehen ist, die mit ähnlicher Krümmung wie die Schrägrillen (6) zwischen einem innenliegenden Schrägrillenabschnitt und einer äußeren Umfangsrille (5) verläuft.

3. Fahrzeugreifen nach Anspruch 1 oder 2, **dadurch gekennzeichnet, daß** die äußeren Umfangsrillen (5) aus seitlich gegeneinander versetzten Abschnitten bestehen und die Schrägrillen (6) im Bereich des Aufeinandertreffens dieser versetzten Abschnitte in die äußeren Umfangsrillen (5) münden.

4. Fahrzeugreifen nach einem der vorhergehenden Ansprüche, **dadurch gekennzeichnet, daß** sich die Schrägrillen (6) im Schulterbereich (4) in Form von außerhalb der Reifenaufstandsfläche (10) in ihrer Tiefe abnehmenden, gekrümmten Schulterrillen (8) fortsetzen, die unter einem Winkel von etwa 70° bis 90° zur Reifenmittelebene (CL) verlaufen.

5. Fahrzeugreifen nach einem der vorhergehenden Ansprüche, **dadurch gekennzeichnet, daß** die im Laufflächenzwischenbereich (34) gelegenen Enden der Schrägrillen (6) nach der Einmündung der Schrägrille in die jeweils nachfolgende Schrägrille in die Laufrichtung kennzeichnende Rillenenden (9) auslaufen, deren Tiefe auf Null abnimmt.

6. Fahrzeugreifen nach Anspruch 1, **dadurch gekennzeichnet, daß** die zentrale Umfangsrippe (1) durch gekrümmte und in Umfangsrichtung gegeneinander versetzte Sackrillen (11) aufgelockert ist.

7. Fahrzeugreifen nach einem der vorhergehenden Ansprüche, **dadurch gekennzeichnet, daß** die Breite der äußeren Umfangsrillen (5) etwa 40 % der Breite der inneren Umfangsrillen (2), die Breite der Schrägrillen (6, 7) etwa 40 % bis 60 % der Breite der inneren Umfangsrillen (2) und die Breite der Schulterrillen (8) zumindest benachbart der äußeren Umfangsrillen (5) etwa 60 % bis 80 % der Breite der inneren Umfangsrillen (2) beträgt, deren Breite wiederum etwa 10 % der halben Laufflächenbreite (TW/2) entspricht.

8. Fahrzeugreifen nach einem der vorhergehenden Ansprüche, **dadurch gekennzeichnet, daß** der Laufflächenzwischenbereich (3) sich jeweils etwa über ein Drittel der halben Laufflächenbreite (TW/2) erstreckt und von der Laufflächenmittellinie (CL) etwa um 25 % bis 30 % der halben Laufflächenbreite (TW/2) beabstandet ist.

## Claims

1. Vehicle tyre having a tread with a directionally bound tread pattern, **characterised in that** an inner circumferential groove (2) is provided on both sides of a central circumferential rib (1) and in each case has a smaller width than the circumferential rib (1); **in that** an intermediate tread zone (3) is in each case formed between these inner circumferential grooves (2) and outer circumferential grooves (5) disposed in the shoulder transition region and having a smaller width than the inner circumferential grooves (2), wherein oblique grooves (6) which are curved in arc-shaped manner in the direction of the shoulder regions (4) are provided, which, on the one hand, open into the outer circumferential grooves (5) and, on the other hand, communicate with the respective oblique groove (6) of like design, which follows in the direction of running.

2. Vehicle tyre in accordance with claim 1, **characterised in that** an arc-shaped intermediate groove (7) is in each case provided between two like oblique grooves (6) and extends with a similar curvature to the oblique grooves (6) between an inwardly disposed oblique groove section and an outer circumferential groove (5).

3. Vehicle tyre in accordance with claim 1 or claim 2, **characterised in that** the outer circumferential grooves (5) consist of sections which are laterally displaced relative to one another and **in that** the oblique grooves (6) open into the outer circumferential grooves (5) in the region where these displaced sections meet.

4. Vehicle tyre in accordance with any of the preceding claims, **characterised in that** the oblique grooves (6) continue in the shoulder region (4) in the form of curved shoulder grooves (8) which reduce in depth outside of the tyre contact patch (10) and extend at an angle of approximately 70° to 90° to the central plane (CL) of the tyre.

5. Vehicle tyre in accordance with any of the preceding claims, **characterised in that** the ends of the oblique grooves (6) disposed in the intermediate tread zone (3) of the tread run out, after the oblique groove has opened into the respectively following oblique groove, into groove ends (9) which characterise the direction of running and the depth of which reduces to zero.

6. Vehicle tyre in accordance with claim 1, **characterised in that** the central circumferential rib (1) is loosened up by curved blind grooves (11) which are displaced relative to one another in the circumferential direction.

7. Vehicle tyre in accordance with any of the preceding claims, **characterised in that** the width of the outer circumferential grooves (5) amounts to approximately 40 % of the width of the inner circumferential grooves (2), **in that** the width of the oblique grooves (6, 7) amounts to approximately 40 % to 60 % of the width of the inner circumferential grooves (2), and **in that** the width of the shoulder grooves (8) amounts to approximately 60 % to 80 % of the width of the inner circumferential grooves (2) at least adjacent to the outer circumferential grooves (5), with the width of the inner circumferential grooves (2) in turn corresponding to approximately 10 % of the half tread width (TW/2).

8. Vehicle tyre in accordance with any of the preceding claims, **characterised in that** the tread intermediate zone (3) in each case extends over approximately one third of the half tread width (TW/2) and is spaced from the tread centre line (CL) approximately by 25 % to 30 % of the half tread width (TW/2).

## Revendications

1. Pneumatique de véhicule comportant une surface de roulement à sculpture directionnelle,
**caractérisé en ce que**
de chaque côté d'une nervure circonférentielle centrale (1), il est prévu une rainure circonférentielle intérieure (2) ayant une largeur inférieure à la nervure circonférentielle (1),
entre lesdites rainures circonférentielles intérieures (2) et des rainures circonférentielles extérieures (5) qui sont situées dans la zone de transition d'épaulement et qui ont une largeur inférieure aux rainures circonférentielles intérieures (2), il y a chaque fois une zone intermédiaire de surface de roulement (3) dans laquelle il est prévu des rainures obliques (6) recourbées en forme d'arc en direction des zones d'épaulement (4), lesquelles rainures obliques, d'une part, débouchent dans les rainures circonférentielles extérieures (5) et, d'autre part, sont chacune reliées à la rainure oblique analogue (6) qui les suit dans le sens de rotation.

2. Pneumatique de véhicule selon la revendication 1, **caractérisé en ce qu'**il est chaque fois prévu entre deux rainures obliques analogues (6) une rainure intermédiaire arquée (7) qui s'étend entre une section de rainure oblique intérieure et une rainure circonférentielle extérieure (5) en ayant une courbure semblable à celle des rainures obliques (6).

3. Pneumatique de véhicule selon la revendication 1 ou 2, **caractérisé en ce que** les rainures circonférentielles extérieures (5) se composent de sections décalées latéralement les unes par rapport aux autres et **en ce que** les rainures obliques (6) débouchent dans les rainures circonférentielles extérieures (5) dans la zone où ces sections décalées se rencontrent.

4. Pneumatique de véhicule selon l'une des revendications précédentes, **caractérisé en ce que** les rainures obliques (6) se poursuivent dans la zone d'épaulement (4) sous forme de rainures d'épaulement recourbées (8) dont la profondeur diminue à l'extérieur de la surface de contact (10) du pneu, et s'étendent en faisant un angle d'à peu près 70° à 90° avec le plan médian (CL) du pneu.

5. Pneumatique de véhicule selon l'une des revendications précédentes, **caractérisé en ce que**, les extrémités des rainures obliques (6) situées dans la zone intermédiaire de surface de roulement (34) se terminent, après le débouché de la rainure oblique dans la rainure oblique suivante, en formant les extrémités de rainure (9) qui indiquent le sens de rotation et dont la profondeur diminue jusqu'à zéro.

6. Pneumatique de véhicule selon la revendication 1, **caractérisé en ce que** la nervure circonférentielle centrale (1) est assouplie par des rainures borgnes (11) recourbées et décalées les unes par rapport aux autres dans la direction circonférentielle.

7. Pneumatique de véhicule selon l'une des revendications précédentes, **caractérisé en ce que** la largeur des rainures circonférentielles extérieures (5) fait environ 40 % de la largeur des rainures circonférentielles intérieures (2), la largeur des rainures obliques (6, 7) fait à peu près 40 % à 60 % de la largeur des rainures circonférentielles intérieures (2) et la largeur des rainures d'épaulement (8) fait, au moins à proximité des rainures circonférentielles extérieures (5), à peu près 60 % à 80 % de la largeur des rainures circonférentielles intérieures (2) qui, quant à elle, correspond à environ 10 % de la moitié de la largeur de la surface de roulement (TW/2).

8. Pneumatique de véhicule selon l'une des revendications précédentes, **caractérisé en ce que** la zone intermédiaire de surface de roulement (3) s'étend chaque fois sur à peu près un tiers de la moitié de la largeur de la surface de roulement (TW/2) et est éloignée de la ligne médiane (CL) de la surface de roulement d'à peu près 25 % à 30 % de la moitié de la largeur de la surface de roulement (TW/2).
